(19) **Europäisches Patentamt / European Patent Office / Office européen des brevets**

(11) **EP 4 576 266 A1**

(12) # EUROPEAN PATENT APPLICATION

(43) Date of publication:
**25.06.2025   Bulletin 2025/26**

(21) Application number: **23307355.0**

(22) Date of filing: **22.12.2023**

(51) International Patent Classification (IPC):
$H01M\ 4/62^{(2006.01)}$   $H01M\ 4/04^{(2006.01)}$
$H01M\ 4/131^{(2010.01)}$   $H01M\ 4/136^{(2010.01)}$
$H01M\ 4/1391^{(2010.01)}$   $H01M\ 4/1397^{(2010.01)}$
$H01M\ 4/485^{(2010.01)}$   $H01M\ 4/505^{(2010.01)}$
$H01M\ 4/525^{(2010.01)}$

(52) Cooperative Patent Classification (CPC):
H01M 4/0435; H01M 4/131; H01M 4/136;
H01M 4/1391; H01M 4/1397; H01M 4/485;
H01M 4/505; H01M 4/525; H01M 4/622;
H01M 4/623

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ARKEMA FRANCE**
**92800 Puteaux (FR)**

(72) Inventors:
• **FUKUYAMA, TAKEHIRO**
**KYOTO, 600-8815 (JP)**
• **MARCHAL, LAURELINE**
**69491 PIERRE-BENITE CEDEX (FR)**
• **MATSUSE, YUJI**
**KYOTO, 600-8815 (JP)**
• **SHIMONISHI, YOSHIYUKI**
**KYOTO, 600-8815 (JP)**

(74) Representative: **Arkema Patent**
**Arkema France**
**DRD-DPI**
**51, Esplanade du Général de Gaulle**
**CS 10478**
**92907 Paris La Défense Cedex (FR)**

(54) **BINDER FOR DRY PROCESS ELECTRODE PREPARATION**

(57)   The present invention relates to a dry composition comprising at least one active material, at least one binder, optionally at least one conductive agent, characterized in that said at least one binder comprises a fluoropolymer and a polyamide thermoplastic polymer.

EP 4 576 266 A1

## Description

### Technical field

The present invention relates generally to the field of electrical energy storage in the lithium storage batteries of Li-ion type. More specifically, the invention relates to a composition for a dry-coated electrode for Li-ion battery. Another aspect of the invention is a process for making an electrode using said composition. The invention also relates to lithium-ion batteries manufactured by incorporating said electrode.

### Background of the invention

An elementary cell of a Li-ion storage battery or lithium battery comprises an anode (at discharge), and a cathode (likewise at discharge) generally made of a lithium insertion compound of metal oxide type, such as $LiMn_2O_4$, $LiCoO_2$ or $LiNiO_2$, between which is inserted an electrolyte which conducts lithium ions.

Rechargeable or secondary cells are more advantageous than primary (non-rechargeable) cells because the associated chemical reactions that take place at the positive and negative electrodes of the battery are reversible. The electrodes of secondary cells can be regenerated several times by applying an electrical charge. Many advanced electrode systems have been developed to store electrical charge. At the same time, much effort has been devoted to the development of electrolytes capable of improving the capabilities of electrochemical cells.

For their part, the electrodes generally comprise at least one current collector on which is deposited, in the form of a film, a composite material consisting of a so-called active material because it has an electrochemical activity with respect to lithium, a polymer which acts as a binder, plus one or more electronically conductive additives which are generally carbon black or acetylene black, and optionally a surfactant.

Binders are counted among the so-called inactive components because they do not directly contribute to the cell capacity. However, their key role in electrode processing and their considerable influence on the electrochemical performance of electrodes have been widely described. The main relevant physical and chemical properties of binders are the thermal stability, the chemical and electrochemical stability, tensile strength (strong adhesion and cohesion), and flexibility. The main objective of using a binder is to form stable networks of the solid components of the electrodes, i.e. the active materials and the conductive agents (cohesion). In addition, the binder must ensure close contact of the composite electrode to the current collector (adhesion).

Poly(vinylidene fluoride) (PVDF) is used binder in lithium-ion batteries because of its excellent electrochemical stability, good bonding capability and high adhesion to electrode materials and current collectors. PVDF can only be dissolved in certain organic solvents such as N-Methyl pyrrolidone (NMP), which is volatile, flammable, explosive, and highly toxic, leading to serious environment concern. Indeed, in the wet slurry process, active materials and binders are dispersed in a liquid solution. The liquid utilized are usually organic solvents or water. The dispersion is cast on a current collector then dried in a high temperature oven to produce an electrode. In this process, a high amount of energy is needed to dry out the liquid components of the slurry and organic solvents additionally produce harmful vapors which require special equipment to prevent free emission to the environment.

Compared to the conventional wet-suspension electrode manufacturing method, dry (solvent-free) manufacturing processes are simpler; these processes eliminate the emission of volatile organic compounds and offer the possibility of manufacturing electrodes with higher thicknesses (>120μm), with a higher energy density of the final energy storage device. The change in production technology will have little impact on the active material of the electrodes, however, the polymer additives responsible for the mechanical integrity of the electrodes must be adapted to the new manufacturing conditions.

US 2019/0305316 discloses dry process electrode films including a microparticulate non-fibrillizable binder having certain particle sizes and a method to obtain a film flexible enough to handle for a roll-to-roll process by using fibrillizable binders. However, the fibrillizable binders require an extra shearing in addition to dispersing the components. This consumes high energy and destructive against the active materials. It is also known from US 2020/0313193 dry-process electrode films including an elastic polymer binder wherein the dry-electrode film is free standing and comprises at most an insubstantial amount of polytetrafluoroethylene. US 2020/0313193 mainly discloses polyethylene, as elastic polymer binder, which is not electrochemically stable enough for use in both cathode and anode of the lithium-ion secondary batteries.

Therefore, there is still a need to develop new electrode compositions for Li-ion batteries that are suitable for processing without the use of organic solvents.

### Summary of the invention

In a first aspect, the present invention provides a dry composition comprising at least one active material, at least

**EP 4 576 266 A1**

one binder, optionally at least one conductive agent, characterized in that said at least one binder comprises a fluoropolymer and a polyamide thermoplastic polymer. It has been found that the binder according to the present invention allows the preparation of electrodes through dry process with improved coulombic efficiency. The technical effect on the efficiency of the electrodes can be obtained by adding polyamide thermoplastic polymer to a binder comprising a fluoropolymer.

In one embodiment, said polyamide thermoplastic polymer has a particle size distribution Dv50 lower than 30 $\mu$m.

In one embodiment, said fluoropolymer is a fibrillizable fluoropolymer, preferably comprises recurring units derived from a monomer **M1a** being tetrafluoroethylene.

In one embodiment, said fibrillizable fluoropolymer has a particle size distribution Dv50 lower than 1000 $\mu$m.

In another embodiment, said fluoropolymer is a non-fibrillizable polymer, preferably comprises recurring units derived from a monomer **M1a** selected from the group consisting of vinylidene fluoride, trifluoroethylene, 1,2-difluoroethylene, perfluoro(alkyl vinyl) ethers, perfluoro(1,3-dioxole), perfluoro(2,2-dimethyl-1,3-dioxole), monomers of formula $CF_2=CFOCF_2CF(CF_3)OCF_2CF_2X$ wherein X is $SO_2F$, $CO_2H$, $CH_2OH$, $CH_2OCN$ or $CH_2OPO_3H$, monomers of formula $CF_2=CFOCF_2CF_2SO_2F$, monomers of formula $F(CF_2)nCH_2OCF=CF_2$ wherein n is 1, 2, 3, 4 or 5, monomers of formula $R^1CH_2OCF=CF_2$ wherein $R^1$ is hydrogen or $F(CF_2)_m$ and m is 1, 2, 3 or 4; monomers of formula $R^2OCF=CH_2$ wherein $R^2$ is $F(CF_2)_p$ and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoropropene, ethylene and 2-trifluoromethyl-3,3,3-trifluoro-1-propène or mixtures thereof.

In one embodiment, said non-fibrillizable fluoropolymer has a particle size distribution Dv50 lower than 100 $\mu$m.

In one embodiment, said polyamide thermoplastic polymer is selected from the group consisting of PA 6, PA 11, PA 12, PA 6.10, PA 6.12, PA 6.14, PA 6.18, PA 10.10, PA 10.12, copolyamides, and mixtures thereof.

In one embodiment, said at least one active material is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

In another embodiment, said at least one active material is selected from the group consisting of lithium metal, lithium alloy, a metal oxide, a carbon material such as graphite or hard carbon, silicon, a silicon alloy, and $Li_4TiO_{12}$.

In one embodiment, the dry composition has the following mass composition:

    a. 50% to 99,9% of said at least one active material, preferably 50% to 99%,
    b. 0% to 25% of said at least one conductive agent, preferably 0.5% to 25%,
    c. 0.1% to 25% of said at least one binder, preferably 0.5% to 25%,
    d. 0% to 5% of at least an additive selected from the group consisting of plasticizer, ionic liquid, dispersing agent for conductive additive, and flowing aid agent;

the sum of all these percentages being 100%.

In another aspect, the present invention relates to a film comprising, preferably consisting of, the dry composition according to the present invention.

In one embodiment, said film has a density lower than 1.65 g/cc when the active material, comprised in the dry composition, is selected from the group consisting of lithium metal, lithium alloy, a metal oxide, a carbon material such as graphite or hard carbon, silicon, a silicon alloy, and $Li_4TiO_{12}$. Such density allows higher capacity and rate performance.

In another embodiment, said film has a density greater than 1.65 g/cc when the active material, comprised in the dry composition, is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

In another aspect, the present invention relates to a dry-coated electrode comprising the dry composition according to the present invention coated on a substrate by a solventless process.

In another aspect, the present invention relates to Li-ion battery comprising a positive electrode, a negative electrode and a separator, wherein at least one of the electrodes is a dry-coated electrode according to the present invention.

In another aspect, the present invention relates to a process to prepare a dry-coated electrode according to the

3

present invention comprising the steps of dry mixing at least one active material, at least one binder, optionally at least one conductive agent to provide an electrode formulation ; processing said electrode formulation to form a free standing film, and laminated said free standing film on a substrate to form a laminated film coated on a substrate.

In another aspect, the present invention relates to a process to prepare a dry-coated electrode according to the present invention comprising the steps of dry mixing at least one active material, at least one binder, optionally at least one conductive agent to provide an electrode formulation ; depositing said electrode formulation on a substrate by a solvent less process to obtain a Li-ion battery electrode; consolidation of said electrode by thermo-mechanical treatment carried out at a temperature ranging from 15°C to 300°C.

## Detailed description of the invention

### Dry composition

In a first aspect of the present invention a dry composition is provided. Said dry composition comprises at least one active material and at least one binder. Said at least one binder comprises a fluoropolymer and a polyamide thermoplastic polymer. In the dry composition, said at least one binder and said at least one active material are in powder form.

In the dry composition, the weight ratio between said fluoropolymer and said polyamide thermoplastic polymer is from 99/1 to 1/99, advantageously from 90/10 to 10/90, preferably from 80/20 to 20/80, more preferably 70/30 to 30/70.

The Dv50 is the particle size at the 50th percentile (in volume) of the cumulative size distribution of particles. This parameter is determined by laser granulometry. A Malvern INSITEC System particle size analyzer is used for the measurement. This is done in the dry process by laser diffraction on a powder with a focal of 100 mm. This applies to all Dv50 recited in the present description.

The Dv90 is the particle size at the 90th percentile (in volume) of the cumulative size distribution of particles. This parameter is determined by laser granulometry. A Malvern INSITEC System particle size analyzer is used for the measurement. This is done in the dry process by laser diffraction on a powder with a focal of 100 mm. This applies to all Dv90 recited in the present description.

Said at least one binder is in the form of a powder. In particular, that powder has a particle size distribution with a Dv90 less than or equal to 7500 $\mu$m, advantageously less than or equal to 7000 $\mu$m, preferably less than or equal to 6500 $\mu$m, more preferentially less than or equal to 6000 $\mu$m, in particular less than or equal to 5500 $\mu$m, more particularly less than or equal to 5000 $\mu$m. Advantageously, said binder has a particle size distribution with a Dv90 less than or equal to 4500 $\mu$m, preferably less than or equal to 4000 $\mu$m, preferably less than or equal to 3500 $\mu$m, in particular less than or equal to 3000 $\mu$m, more particularly less than or equal to 2500 $\mu$m, preferably less than or equal to 2000 $\mu$m, less than or equal to 1500 $\mu$m, preferentially less than or equal to 1000 $\mu$m, less than or equal to 500 $\mu$m.

Said dry composition may optionally comprise at least one conductive additive. The conductive additives comprise of one or more material that can improve conductivity. Some examples include carbon blacks such as acetylene black, Ketjen black; carbon fibers such as carbon nanotube, carbon nanofiber, vapor growth carbon fiber; metal powders such as SUS powder, and aluminum powder.

As mentioned above, the dry composition comprises at least one active material.

If the electrode to be prepared is a negative electrode, said active material may be selected from the group consisting of lithium metal, lithium alloy, a metal oxide, a carbon material such as graphite or hard carbon, silicon, a silicon alloy, and $Li_4TiO_{12}$ or mixtures thereof.

Alternatively, if the electrode to be prepared is a positive electrode, said active material may be selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co, or Ni, or mixtures thereof.

In addition, the surface of each of the above-described materials may be coated. The coating material is not particularly limited as long as it has lithium-ion conductivity and contains a material capable of being maintained in the form of a coating layer on the surface of the active material. Examples of the coating material include $LiNbO_3$, $Li_4Ti_5O_{12}$, and $Li_3PO_4$.

The shape of the active material is not particularly limited but is preferably particulate.

As mentioned above, it has been surprisingly found that the binder according to the present invention allows electrodes prepared through dry process with improved coulombic efficiency. The adhesion can also be improved by using the binder of the invention compared to known binders.

In one embodiment, the dry composition has the following mass composition:

a. 50% to 99,9% of said at least one active material, preferably 50% to 99%,
b. 0% to 25% of said at least one conductive agent, preferably 0.5% to 25%,
c. 0.1% to 25% of said at least one binder, preferably 0.5% to 25%,
d. 0% to 5% of at least an additive selected from the group consisting of plasticizer, ionic liquid, dispersing agent for conductive additive, and flowing aid agent;

the sum of all these percentages being 100%.

Fluoropolymer

The term "fluoropolymer" means a polymer formed by the polymerization of at least one fluoromonomer, and it includes homopolymers, copolymers, terpolymers and higher polymers which are thermoplastic. "Thermoplastic" is understood here to mean a non-elastomeric polymer. An elastomeric polymer is defined as being a polymer which can be drawn, at ambient temperature, to twice its initial length and which, after releasing the stresses, rapidly resumes its initial length, to within about 10%, as indicated by the ASTM in the Special Technical Publication, No. 184.

According to a preferred embodiment, said fluoropolymer comprises in its chain recurring units derived from at least one fluorinated monomer **M1a** selected from among the compounds containing a vinyl group capable of opening for polymerization and which contains, directly attached to that vinyl group, at least one fluorine atom, a fluoroalkyl group or a fluoroalkoxy group.

Preferably, said fluoropolymer comprises recurring units derived from a monomer **M1a** selected from the group consisting of vinyl fluoride; vinylidene fluoride (VDF); trifluoroethylene (VF3); chlorotrifluoroethylene (CTFE); 1,2-difluoroethylene; tetrafluoroethylene (TFE); hexafluoropropylene (HFP); perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); the product of the formula $CF_2=CFOCF_2CF(CF_3)OCF_2CF_2X$ where X is $SO_2F$, $CO_2H$, $CH_2OH$, $CH_2OCN$, or $CH_2OPO_3H$; the product of the formula $CF_2=CFOCF_2CF_2SO_2F$; the product of the formula $F(CF_2)nCH_2OCF=CF_2$ where n is 1, 2, 3, 4, or 5; the product of the formula $R^1CH_2OCF=CF_2$ where $R^1$ is hydrogen or $F(CF_2)_m$ and m is 1, 2, 3 or 4; the product of the formula $R^2OCF=CH_2$ where $R^2$ is $F(CF_2)_p$ and p is 1, 2, 3 or 4; perfluorobutylethylene (PFBE); trifluoropropene, tetrafluoropropene, hexafluoroisobutylene, perfluorobutylene, pentafluoropropene, bromotrifluoroethylene, chlorofluoroethylene, chlorotrifluoropropene and 2-trifluoromethyl-3,3,3-trifluoro-1-propene or a mixture thereof. Trifluoropropenes include 3,3,3-trifluoropropene. Tetrafluoropropenes include 2,3,3,3-tetrafluoropropene, 1,3,3,3-tetrafluoropropene. Pentafluoropropene includes 1,1,3,3,3-pentafluoropropene or 1,2,3,3,3-pentafluoropropene. Chlorofluoroethylene can refer to either 1-chloro-1-fluoroethylene or 1-chloro-2-fluoroethylene. The isomer 1-chloro-1-fluoroethylene is preferred. Chlorotrifluoropropene is preferably 1-chloro-3,3,3-trifluoropropene or 2-chloro-3,3,3-trifluoropropene.

In said fluoropolymer, the mass percentage of the recurring units **M1a** is at least 50%, preferably at least 60%, preferably greater than 70% and advantageously greater than 80%.

In a particular embodiment, said fluoropolymer is a fibrillizable fluoropolymer. Said fibrillizable fluoropolymer comprises recurring units derived from the monomer **M1a** being tetrafluoroethylene; preferably comprises at least 60% or at least 70% or at least 80% or at least 90% or at least 95 % of recurring units derived from a monomer **M1a** being tetrafluoroethylene on a molar basis. Preferably, said fibrillizable fluoropolymer has a particle size distribution Dv50 lower than 1000 $\mu$m, more preferably lower than 750 $\mu$m, most preferably lower than 500 $\mu$m, in particular lower than 250 $\mu$m, more particularly lower than 100 $\mu$m, most particularly lower than 50 $\mu$m. Said fibrillizable fluoropolymer can be used alone or in combination with other possible fibrillizable binders such as ultra-high molecular weight polypropylene, polyethylene, co-polymers or polymer blends thereof.

In particular, said fibrillizable fluoropolymer comprises recurring units derived from a monomer **M1a** being tetrafluoroethylene and recurring units derived from a fluorinated monomer **M1b** able to copolymerize with tetrafluoroethylene, or recurring units derived from a non-fluorinated monomer **M1c** or a mixture of both **M1b** and **M1c.** Said recurring units derived from a monomer **M1b** selected from the group consisting of vinyl fluoride; trifluoroethylene (VF3); chlorotrifluoroethylene (CTFE); 1,2-difluoroethylene; vinylidene fluoride; hexafluoropropylene (HFP); perfluoro(alkyl vinyl) ethers such as perfluoro(methyl) vinyl)ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); the product of the formula $CF_2=CFOCF_2CF(CF_3)OCF_2CF_2X$ where X is $SO_2F$, $CO_2H$, $CH_2OH$, $CH_2OCN$, or $CH_2OPO_3H$; the product of the formula $CF_2=CFOCF_2CF_2SO_2F$; the product of the formula $F(CF_2)nCH_2OCF=CF_2$ where n is 1, 2, 3, 4, or 5; the product of the formula $R^1CH_2OCF=CF_2$ where $R^1$ is hydrogen or $F(CF_2)_m$ and m is 1, 2, 3 or 4; the product of the formula $R^2OCF=CH_2$ where $R^2$ is $F(CF_2)_p$ and p is 1, 2, 3 or 4; perfluorobutyl ethylene (PFBE); trifluoropropene, tetrafluoropropene, hexafluoroisobutylene, perfluorobutylene, pentafluoropropene, bromotrifluoroethylene, chlorofluoroethylene, chlorotrifluoropropene and 2-trifluoromethyl-3,3,3-trifluoro-1-propene or a mixture thereof. Said non-fluorinated monomer **M1c** is defined hereunder.

In another particular embodiment, said fluoropolymer is a non-fibrillizable polymer. Preferably said fluoropolymer is non-fibrillizable when it comprises recurring derived from a monomer **M1a** selected from the group consisting of vinylidene fluoride, trifluoroethylene, 1,2-difluoroethylene, perfluoro(alkyl vinyl) ethers, perfluoro(1,3-dioxole), perfluoro(2,2-dimethyl-1,3-dioxole), monomers of formula $CF_2=CFOCF_2CF(CF_3)OCF_2CF_2X$ wherein X is $SO_2F$, $CO_2H$, $CH_2OH$, $CH_2OCN$ or $CH_2OPO_3H$, monomers of formula $CF_2=CFOCF_2CF_2SO_2F$, monomers of formula $F(CF_2)$ $nCH_2OCF=CF_2$ wherein n is 1, 2, 3, 4 or 5, monomers of formula $R^1CH_2OCF=CF_2$ wherein $R^1$ is hydrogen or $F(CF_2)_m$ and m is 1, 2, 3 or 4; monomers of formula $R^2OCF=CH_2$ wherein $R^2$ is $F(CF_2)_p$ and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoropropene, ethylene and 2-trifluoromethyl-3,3,3-trifluoro-1-propene or mixtures thereof. Preferably said non-fibrillizable fluoropolymer comprises at least 50% or at least 60% or at least 70% or at least 80% or at least 90 % of recurring units derived from a monomer **M1a** as defined herein on a molar basis. Preferably, said non-fibrillizable fluoropolymer has a particle size distribution Dv50 lower than 100 $\mu$m, more preferably lower than 75 $\mu$m, most preferably lower than 50 $\mu$m, in particular lower than 25 $\mu$m, more particularly lower than 10 $\mu$m, most particularly lower than 5 $\mu$m. In particular, the non-fibrillizable fluoropolymer comprises at least recurring units derived from a monomer **M1a** being vinylidene fluoride. The non-fibrillizable fluoropolymer can be a homopolymer or a copolymer of vinylidene fluoride. According to a particular embodiment, the non-fibrillizable fluoropolymer is a vinylidene fluoride homopolymer. In particular, the non-fibrillizable fluoropolymer comprises recurring units derived from a monomer **M1a** being vinylidene fluoride and recurring units derived from a fluorinated monomer **M1b** able to copolymerize with vinylidene fluoride, or recurring units derived from a non-fluorinated monomer **M1c** or a mixture of both **M1b** and **M1c.**

According to one embodiment, said non-fibrillizable fluoropolymer comprises recurring units derived from a monomer **M1a** being vinylidene fluoride and recurring units derived from a monomer **M1b** selected from the group consisting of vinyl fluoride; trifluoroethylene (VF3); chlorotrifluoroethylene (CTFE); 1,2-difluoroethylene; tetrafluoroethylene (TFE); hexafluoropropylene (HFP); perfluoro(alkyl vinyl) ethers such as perfluoro(methyl) vinyl)ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); the product of the formula $CF_2=CFOCF_2CF(CF_3)OCF_2CF_2X$ where X is $SO_2F$, $CO_2H$, $CH_2OH$, $CH_2OCN$, or $CH_2OPO_3H$; the product of the formula $CF_2=CFOCF_2CF_2SO_2F$; the product of the formula $F(CF_2)$ $nCH_2OCF=CF_2$ where n is 1, 2, 3, 4, or 5; the product of the formula $R^1CH_2OCF=CF_2$ where $R^1$ is hydrogen or $F(CF_2)_m$ and m is 1, 2, 3 or 4; the product of the formula $R^2OCF=CH_2$ where $R^2$ is $F(CF_2)_p$ and p is 1, 2, 3 or 4; perfluorobutyl ethylene (PFBE); trifluoropropene, tetrafluoropropene, hexafluoroisobutylene, perfluorobutylene, pentafluoropropene, bromotrifluoroethylene, chlorofluoroethylene, chlorotrifluoropropene and 2-trifluoromethyl-3,3,3-trifluoro-1-propene or a mixture thereof. Preferably, said non-fibrillizable fluoropolymer comprises recurring units derived from a monomer **M1a** being vinylidene fluoride and recurring units derived from a monomer **M1b** selected from the group consisting of vinyl fluoride; trifluoroethylene; chlorotrifluoroethylene; 1,2-difluoroethylene, tetrafluoroethylene; hexafluoropropylene; perfluoro(alkylvinyl)ethers such as perfluoro(methyl vinyl)ether, perfluoro(ethyl vinyl)ether or perfluoro(propyl vinyl)ether; perfluoro(1,3-dioxole); perfluoro(2,2-dimethyl-1,3-dioxole); the product of the formula $CF_2=CFOCF_2CF(CF_3)OCF_2CF_2X$ where X is $SO_2F$, $CO_2H$, $CH_2OH$, $CH_2OCN$, or $CH_2OPO_3H$; the product of the formula $CF_2=CFOCF_2CF_2SO_2F$; the product of the formula $F(CF_2)nCH_2OCF=CF_2$ where n is 1, 2, 3, 4, or 5; the product of the formula $R'CH_2OCF=CF_2$ wherein R' is hydrogen or $F(CF_2)_z$ and z is 1, 2, 3 or 4; the product of the formula $R''OCF=CH_2$ in which R'' is $F(CF_2)_z$ and z is 1, 2, 3 or 4; trifluoropropene, tetrafluoropropene, hexafluoroisobutylene, perfluorobutylene, pentafluoropropene, bromotrifluoroethylene, chlorofluoroethylene, chlorotrifluoropropene or 2-trifluoromethyl-3,3,3-trifluoro-1-propene or a mixture thereof. In particular, said non-fibrillizable fluoropolymer comprises recurring units derived from a monomer **M1a** being vinylidene fluoride and recurring units derived from a monomer **M1b** selected from the group consisting of trifluoroethylene, chlorotrifluoroethylene, 1,2-difluoroethylene, tetrafluoroethylene and hexafluoropropylene or a mixture thereof.

Said fluoropolymer, either fibrillizable or non-fibrillizable, may also comprise recurring units derived from a non-fluorinated monomer **M1c** with the formula $R^aR^bC=C(R^C)C(O)R^d$ in which the substituents $R^a$, $R^b$ and $R^c$ are independently selected from the group consisting of H and $C_1$-$C_5$ alkyl; $R^d$ is selected from the group consisting of -$NHC(CH_3)_2CH_2C(O)CH_3$ or -$OR^{d'}$ with $R^{d'}$ selected from the group consisting of H and $C_1$-$C_{18}$ alkyl optionally substituted by one or more - OH, -$CO_2H$, -$SO_3H$, -$PO_3H$, -$OC(O)R^{d''}$, -$C(O)O$-$R^{d''}$ or a five- or ten-chain heterocycle comprising at least one nitrogen atom in its cyclic chain; Rd'' being selected from the group consisting of alkyl $C^1$-$C^6$ or aryl $C^6$-$C^{12}$ optionally substituted by one or more -OH, -$CO_2H$, -$SO_3H$, -$PO_3H$ group(s). This heterocycle can be saturated or unsaturated or aromatic. The said heterocycle can be monocyclic or bicyclic. Said heterocycle can be a pyrrole, pyrrolidine, pyridine, piperidine, pyrimidine, pyrazine, 1,4-dihydropyridine, indole, oxindole, isatine, quinoline, isoquinoline, quinazoline, imidazoline, pyrazolidine, 2-pyrrolidone, deltalactam, succinimide, 2-imidazolidinone, 4-imidazolidinone. This heterocycle can be substituted by one or more $C_1$-$C_5$ alkyl groups. As mentioned above, the alkyl $C_1$-$C_{18}$ is optionally substituted by said heterocycle. The latter can be bonded to the alkyl chain by the nitrogen atom or any other atom forming the heterocycle. Preferably the heterocycle is 2-pyrrolidone, delta-lactam, succinimide, 2-imidazolidinone, 4-imidazolidinone. Said monomer **M1c** may have the formula $R^aR^bC=C(R^c)C(O)R^d$ in which the substituents $R^a$, $R^b$ and $R^c$ are independently selected from the group consisting of H and $C_1$-$C_5$ alkyl; $R^d$ is selected from the group consisting of -$NHC(CH_3)_2CH_2C(O)CH_3$ or -$OR^{d'}$ with $R^{d'}$ selected from the group consisting of H and $C_1$-$C_{18}$ alkyl optionally substituted by one or more -OH, -$CO_2H$, -$SO_3H$, -$PO_3H$, -$OC(O)R^{d''}$, -$C(O)O$-$R^{d''}$ or a five- or ten-membered heterocycle comprising at least one nitrogen atom in its cyclic chain; $R^{d''}$ being selected from the group consisting of alkyl $C_1$-$C_6$ or aryl $C_6$-$C_{12}$ optionally substituted by one or more -OH, -$CO_2H$, -$SO_3H$, -$PO_3H$ group(s). Preferably, the heterocycle is as defined above, especially the heterocycle is 2-pyrrolidone, deltalactam, succinimide, 2-imidazolidinone, 4-imidazolidinone. Preferably, the substituent $R^{d''}$ is selected from the group consisting of H, methyl, ethyl, propyl, n-butyl, isobutyl, t-butyl, n-dodecyl ester, amyl, isoamyl, hexyl 2-ethylhexyl ester, lauryl esteryl and n-octyl hydroxyethyl hydroxybutyl hydroxypropyl and ureido group substituted ethyl for the substituting ethyl group. In particular, said monomer **M1c** is of formula $R^aR^bC=C(R^c)C(O)R^d$ in which the substituents $R^a$ and $R^b$ are H; $R^c$ is H or $CH_3$; $R^d$ is -$OR^{d'}$ with $R^{d'}$ selected from the group consisting of H, methyl, ethyl, propyl, n-butyl, isobutyl, t-butyl, hydroxy propyl, hydroxy butyl, 2-pyrrolidone, deltalactam, succinimide, 2-imidazolidinone, 4-imidazolidinone. More specifically, said M1c monomer can be acrylic acid, methyl acrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl methacrylate, hydroxyethyl methacrylate, hydroxyethyl acrylate, hydroxypropyl acrylate, hydroxybutyl acrylate, methyl acrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers with the formula $CH_2=CH(CO_2CH_2CH_2CO_2H)$, $CH_2=CH(CO_2CH_2CH_2$-O-$C(O)$-$CH_2CH_2CO_2H)$, $CH_2=CH(CO_2CH_2CH_2CH_2$-O-$C(O)$-$CH_2CH_2CO_2H)$, $CH_2=CH(CO_2CH(CH_3)CH_2$-O-$C(O)$-$CH_2CH_2CO_2H)$, $CH_2=CH(CO_2CH_2CH_2$-O-$C(O)$-$C_6H_4CO_2H)$, $CH_2=CH(CO_2CH_2CH_2CH_2CH(CO_2H)CH_2CH_2CO_2H)$; and mixtures thereof. Of these, said monomer **M1c** with an alkyl group having 1 to 8 carbon atoms is preferred, and an alkyl group having 1 to 5 carbon atoms is more preferable. Said fluoropolymer may comprise one or more recurring units derived from said monomer **M1c** as defined herein.

The fluoropolymer, fibrillizable or non-fibrillizable, can be functionalized allowing it to improve adhesion to metals. Thus, said fluoropolymer may comprise recurring units carrying at least one of the functional groups selected from the group consisting of carboxylic acid, carboxylic acid anhydride, carboxylic acid esters, epoxy groups such as glycidyl, amide, hydroxyl, carbonyl, mercapto, sulphide, oxazoline, phenolics, ester, ether, siloxane, sulfonic, sulphuric, phosphoric, phosphonic; preferably at least one carboxylic acid functional group or hydroxyl group.

The functional group may be introduced by a chemical reaction which may be grafting, or a copolymerization of the fluoropolymer with a monomer carrying at least one of the said functional groups and a vinyl function capable of copolymerizing with the fluorinated monomer, according to techniques well known to the skilled person.

Alternatively, the functionality may be introduced through a chain transfer agent used in the synthesis process. The chain transfer agent can be a polymer with a molecular weight of 20000 g/mol or less and carrying functional groups selected from the groups consisting of carboxylic acid, carboxylic acid anhydride, carboxylic acid esters, epoxy groups (such as glycidyl), amide, hydroxyl, carbonyl, mercapto, sulfide, oxazoline, phenolics, ester, ether, siloxane, sulfonic, sulphuric, phosphoric, phosphonic. An example of such a chain transfer agent are acrylic acid oligomers. According to a preferred embodiment, the chain transfer agent is an acrylic acid oligomer with a molecular weight of 20000 g/mol or less. Alternatively, the functional group may be introduced by an oligomeric or polymeric compound comprising said functional group and mixed with the fluoropolymer. The oligomeric or polymeric compound can be impregnated in, mixed with, or intimately mixed with the fluoropolymer. In this case, the functional group may be derived from the compounds selected from the group consisting of acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate and acryloyloxy propylsuccinate. For example, the functional group may be an oligomer or a polymer comprising recurring units derived from a monomer selected from the group consisting of acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, and acryloyloxy propylsuccinate. According to an embodiment, said oligomer or polymer has an average molecular weight by weight of less than or equal to 100000 g/mol, advantageously less than 80000 g/mol, preferably less than 60000 g/mol, more preferably less than 40000 g/mol, in particular less than 20000 g/mol. The average molecular weight is determined by GPC using a Waters 2695e device coupled with a Wyatt NEON refractometer equipped with two PL Gel mixed C columns and a guard column (7.8 mm I.D. $\times$ 30 cm, 5 $\mu$m) under the following conditions: Temperature: 35°C; flow rate: 1.0 mL/min; injection volume: 100 $\mu$L. Samples are prepared at a concentration of 1 mg/ml in THF. Twelve poly(methylmethacrylate) samples with a molecular weight of 535 to 2,210,000 g/mol are used as the calibration standard. Said oligomer or polymer is preferably added during the production process of the fluoropolymer. The content in functional group of the fluoropolymer is not less than 0.01% molar, preferably not less than 0.1% molar, and not more than 15% molar, preferably not more than 10% molar.

Said fluoropolymer preferably has a high molecular weight. High molecular weight, as used here, means fluoropolymer having a melt viscosity greater than 100 Pa.s, preferably greater than 500 Pa.s, preferably greater than 1000 Pa.s, according to ASTM D-3835 measured at 232°C and 100 sec-1.

Said fluoropolymer used in the invention can be obtained by known polymerization methods such as emulsion or suspension polymerization. According to a preferred embodiment, said fluoropolymer is prepared by an emulsion polymerization process in the absence of fluorinated surfactant. Thus, the fluoropolymer may comprise between 10 ppm and 2% by weight of a non-fluorinated surfactant comprising polyethylene glycol or polypropylene glycol motifs. Preferably, said non-fluorinated surfactant has an HLB value of 1 to 20, in particular an HLB value of 1 to 5 or 10 to 15. In particular, said non-fluorinated surfactant comprises at least one polyethylene glycol segment and at least one polypropylene glycol segment, and has an HLB value of 1 to 5 and an average molecular weight by weight of 5000 to 10000 g.mol-1. Alternatively, said non-fluorinated surfactant comprises at least one segment of polyethylene glycol and at least one segment of polypropylene glycol, and has an HLB value of 10 to 15 and an average molecular weight by weight of 500 to 2500 g.mol-1.

According to a preferred embodiment, said fluoropolymer is prepared by a suspension polymerization process. The suspension polymerization process is usually carried out in the presence of a dispersant. The dispersant can be polyvinyl alcohol (PVA) or a compound comprising a cellulose units such as methylcellulose, hydroxypropyl methylcellulose, carboxymethylcellulose.

Said fluoropolymer may be in the form of a latex typically having a solid content of 10 to 60% by weight, preferably 10 to 50%, and having an average particle size by weight of less than 1 micrometer, preferably less than 1000 nm, preferably less than 800 nm, and more preferably less than 600 nm. The average particle size by weight is usually at least 20 nm, preferably at least 50 nm, and advantageously the average size is in the range of 100 to 400 nm. Polymer particles can form agglomerates with an average weight size of 1 to 30 micrometers, and preferably 2 to 10 micrometers. Clumps can break into discrete particles during formulation and application to a substrate.

Said fluoropolymer can be in the form of a powder. This is obtained from the latex, which is subjected, for example, to a drying and optionally granulation step.

According to some embodiments, the vinylidene fluoride contained in said fluoropolymer is bio-based. The term "bio-based" means "derived from biomass". This improves the ecological footprint of the polymer. Bio-based VDF can be characterized by a renewable carbon content, i.e. carbon of natural origin and derived from a biomaterial or biomass, of at least 1% atomic as determined by the 14C content according to the NF EN 16640 standard. The term "renewable carbon" refers to carbon that is naturally occurring and comes from a biomaterial (or biomass), as discussed below. Depending on some embodiments, the biocarbon content of VDF may be greater than 5%, preferably greater than 10%, preference greater than 25%, preference greater than or equal to 33%, preference greater than 50%, preference greater than or equal to 66%, preference greater than 75%, preference greater than 90%, preference greater than 95%, preferably greater than 98%, preferably greater than 99%, advantageously equal to 100%.

Polyamide thermoplastic polymer

Polyamide (homopolyamide or copolyamide abbreviated CoPA) refers to the polymerization or condensation products of the same monomer (in the case of homopolyamides) or of several different monomers (in the case of CoPAs) selected from:

- amino acids or aminocarboxylic acids monomers, and preferably alpha,omega-aminocarboxylic acids monomers;
- lactam-like monomers with between 3 and 18 carbon atoms on the main ring that can be substituted;
- "diamine.diacid" monomers resulting from the reaction between an aliphatic diamine with 4 to 18 carbon atoms and a carboxylic diacid with between 4 and 18 carbon atoms; and
- mixtures thereof, with monomers with different carbon numbers in the case of copolyamides formed by mixing an amino acid monomer with a lactam monomer.

The term 'monomer' in this description of copolyamides refers to 'recurring unit'. Indeed, the case where a recurring unit of the PA consists of a diacid with a diamine is a particular embodiment. It is considered to be the combination of a diamine and a diacid, i.e. the diamine-diacid pair (in equimolar quantity), which corresponds to the monomer. This is due to the fact that individually, the diacide or diamine is only a structural unit, which is not sufficient on its own to polymerize.

Amino acid-type monomers:

Examples of alpha-amino acids include those with 4 to 18 carbon atoms, such as aminocaproic acid, amino-7-heptanoic acid, amino-11-undecanoic acid, n-heptyl-11-aminoundecanoic acid and amino-12-dodecanoic acid.

Lactam-like monomers:

Examples of lactams include those with 3 to 18 carbon atoms on the main ring that can be substituted. Examples include β,β-dimethylpropriolactam, α,α-dimethylpropriolactam, amylolactam, caprolactam (also known as lactam 6), capryllactam (also known as lactam 8), oenantholactam, 2-pyrrolidone and lauryl lactam (also known as lactam 12).

"Diamine.diacide" monomers:

Examples of dicarboxylic acid include acids with between 4 and 18 carbon atoms. Examples include adipic acid, sebacic acid, azelaic acid, suberic acid, isophthalic acid, butanedioic acid, 1,4-cyclohexyldicarboxylic acid, terephthalic acid, sodium or lithium salt of sulphoisophthalic acid, dimerized fatty acids (these dimerized fatty acids have a dimer content of at least 98% and are preferably hydrogenated) and dodecanedioic acid $HOOC-(CH_2)_{10}-COOH$.

Examples of diamines include aliphatic diamines with 4 to 18 atoms, which can be aryl and/or saturated cyclic. Examples include hexamethylenediamine, piperazine, tetramethylene diamine, octamethylene diamine, decamethylene diamine, dodecamethylene diamine, 1,5-diaminohexane, 2,2,4-trimethyl-1,6-diamino-hexane, diamine polyols, isophorone diamine (IPD), methyl pentamethylenediamine (MPDM), bis(aminocyclohexyl) methane (BACM), bis(3-methyl-4-aminocyclohexyl) methane (BMACM), methalylyenediamine, bis-p aminocyclohexylmethane and trimethylhexamethylene diamine.

Examples of diamine-diacid monomers are those resulting from the condensation of hexamethylene diamine with a C6 to C36 diacid, in particular the monomers: 6.6, 6.10, 6.11, 6.12, 6.14, 6.18. Examples include monomers resulting from the condensation of decanediamine with a C6 to C36 diacid, including the following monomers: 10.10, 10.12, 10.14, 10.18; or resulting from the condensation of decanediamine with terephthalic acid, i.e., the monomer 10.T.

Examples of copolyamides formed from the different types of monomers described above are copolyamides resulting from the condensation of two or more alpha omega aminocarboxylic acids or two lactams or one lactam and one alpha omega-aminocarboxylic acid. Other examples include copolyamides resulting from the condensation of at least one alpha omega aminocarboxylic acid (or lactam), at least one diamine and at least one dicarboxylic acid. Mention may also be made of copolyamides resulting from the condensation of an aliphatic diamine with an aliphatic carboxylic acid and at least one other monomer selected from among the aliphatic diamines different from the previous one and the aliphatic diacids different from the previous one.

Examples of copolyamides include caprolactam and lauryl lactam copolymers (PA 6/12), caprolactam, hexamethylene diamine and adipic acid copolymers (PA 6/6.6), copolymers of caprolactam, lauryl lactam, hexamethylene diamine and adipic acid (PA 6/12/6.6), copolymers of caprolactam, hexamethylene diamine and azelaic acid, 11-amino acid undecanoic, and lauryl lactam. (PA 6/6.9/11/12), copolymers of caprolactam, adipic acid and hexamethylene diamine, amino-11-undecanoic acid, lauryl lactam (PA 6/6.6/11/12), copolymers of hexamethylene diamine, azelaic acid, and lauryl lactam (PA 6.9/12), copolymers of 2-pyrrolidone and caprolactam (PA 4/6), copolymers of 2-pyrrolidone and lauryl lactam (PA 4/12), copolymers of caprolactam and undecanoic amino acid 11 (PA 6/11), copolymers of lauryl lactam and capryllactam (PA 12/8), copolymers of 11-amino acid undecanoic acid and 2-pyrrolidone (PA11/4), copolymers of capryllactam and caprolactam (PA 8/6), copolymers of capryllactam and 2-pyrrolidone (PA 8/4), copolymers of lauryl lactam and capryllactam (PA 12/8), copolymers of lauryl lactam and amino-11-undecanoic acid (PA 12/11).

Particularly preferred substances are polyamide 11 and polyamide 12 and copolyamides using monomers 6, 12, 6.10, 6.12, 6.14, 6.18, 10.10 and 10.12, more particularly copolyamides using monomers 6, 12, 6.10, 6.12, 6.14, 6.18, 10.10 and 10.12.

Although, in accordance with a preferred embodiment of the invention, the present invention is generally described in the present application with reference to a powder of copolyamides using monomers 6, 12, 6.10, 6.12, 6.14, 6.18, 10.10 and 10.12, PA12 and PA 11 (which has the additional advantage of being of renewable origin), the present invention is obviously not limited to these powders. The present invention includes any PA powder (homopolyamide or copolyamide) and in which the particles exhibit particle sizes Dv50 inferior to 300 μm, preferably inferior to 100μm and more preferably inferior to 30μm.

The polyamide or copolyamide can be obtained by melt condensation of a single type of monomers or two different types of monomers as described above.

Some suitable polyamides or copolyamides are commercially available from ARKEMA under the trademark RILSAN®, Platamid®, or from EVONIK under the trademark VESTAMID® VESTAMELT®, or from EMS under the trademark GRILAMID®, GRILTEX®.

A polyamide, such as PA 12, or a copolyamide suitable according to the present invention can also be obtained by anionic polymerization of lactam(s) in solvent or in solution. Some suitable ones are commercially available under the trademark ORGASOL® from Arkema.

In a preferred embodiment, the melting temperature of said polyamide thermoplastic polymer is lower than 230°C, advantageously lower than 220°C, preferably lower than 210°C, more preferably lower than 200°C, most preferably lower than 190°C, in particular lower than 180°C, more in particular lower than 170°C, most in particular lower than 160°C. The melting temperature can be measured according to ISO 11357-3 Plastics - Differential scanning calorimetry (DSC) Part 3.

In a preferred embodiment, said polyamide thermoplastic polymer is amorpha or semi-crystalline. Preferably, said polyamide thermoplastic polymer is semi-crystalline.

In a preferred embodiment, said polyamide thermoplastic polymer has a particle size distribution Dv50 lower than 30 $\mu$m, advantageously lower than 28 $\mu$m, preferably lower than 26 $\mu$m, more preferably lower than 24 $\mu$m, most preferably lower than 22 $\mu$m, in particular lower than 20 $\mu$m, more particularly lower than 18 $\mu$m, most particularly lower than 16 $\mu$m. In a preferred embodiment, said polyamide thermoplastic polymer has a particle size distribution Dv50 lower than 14 $\mu$m, advantageously lower than 12 $\mu$m, preferably lower than 10 $\mu$m. The particle size Dv50 as called for in the present application allows to improve the efficiency of the electrode. The particle size distribution Dv50 of the polyamide thermoplastic polymer may be selected based on the particle size distribution Dv50 of said at least one active material. For example, the particle size distribution Dv50 of the polyamide thermoplastic polymer is less than 90% of the particle size distribution Dv50 of said at least one active material; preferably the particle size distribution Dv50 of the polyamide thermoplastic polymer is less than 85% of the particle size distribution Dv50 of said at least one active material.

In a preferred embodiment, said polyamide thermoplastic polymer has a particle size distribution Dv90 lower than 500 $\mu$m, advantageously lower than 450 $\mu$m, preferably lower than 400 $\mu$m, more preferably lower than 350 $\mu$m, most preferably lower than 300 $\mu$m, in particular lower than 250 $\mu$m, more particularly lower than 200 $\mu$m, most particularly lower than 150 $\mu$m. In a preferred embodiment, said polyamide thermoplastic polymer has a particle size distribution Dv90 lower than 100 $\mu$m, advantageously lower than 50 $\mu$m, preferably lower than 20 $\mu$m. The particle size Dv90 as called for in the present application allows to improve the efficiency of the electrode.

The inherent viscosity is measured using an Ubbelhode tube. The measurement is performed at 20°C on a 75 mg sample at a concentration of 0.5% (w/w) in m-cresol. The inherent viscosity is expressed as $(g/100\ g)^{-1}$ and is calculated according to the following formula:

$$\text{Inherent viscosity} = \ln(t_s/t_0) \times 1/C, \text{ wherein } C = m/p \times 100,$$

wherein $t_s$ is the flow time of the solution, $t_0$ is the solvent flow time, m is the mass of the sample and p is the mass of the solvent. This measurement corresponds to the ISO 307 standard, except that the measuring temperature is 20°C instead of 25°C.

The inherent viscosity of said polyamide thermoplastic polymer is lower than or equal to 1.2, advantageously lower than or equal to 1.1, preferably lower than or equal to 1.0, more preferably lower than or equal to 0.9 $(g/100\ g)^{-1}$.

Uses of the dry composition

The dry composition can be used to prepare an electrode. The latter can be prepared from a film made of the dry composition subsequently disposed on the current collector or the dry composition can be coated (by direct calendering or electrospray and calendering) on the current collector without the preparation of a free-standing film.

According to an embodiment, after the powder-mixing step, the electrode is manufactured by a solventless spraying process, by depositing the formulation on the metallic substrate, by a pneumatic spraying process, by electrostatic spraying, by dipping in a fluidized powder bed, by sprinkling, by electrostatic screen printing, by deposition with rotative brushes, by deposition with dosing rotative rolls, by calendering.

According to one embodiment, after the powder mixing step, the electrode is manufactured by a solvent-less process in two steps. A first step consists in manufacturing a free-standing film from the pre-mixed formulation with a thermo-mechanical process like extrusion, calendering or thermo-compression. In a second step, the free-standing film is laminated onto the metallic substrate by a process combining temperature and pressure like calendering or thermo-compression.

The dry composition of the present invention is useful to prepare a film. Hence, the present invention provides a film comprising, preferably consisting of, the dry composition of the present invention. In a preferred embodiment, for an anode composition, the film has a density lower than 1.65 g/cc, advantageously lower than 1.64 g/cc, preferably lower than 1.63 g/cc, more preferably lower than 1.62 g/cc, most preferably lower than 1.61 g/cc, in particular lower than 1.60 g/cc, more particularly lower than 1.59 g/cc, most particularly lower than 1.58 g/cc. In a preferred embodiment, the film has a density greater than 1.45 g/cc, advantageously greater than 1.46 g/cc, preferably greater than 1.47 g/cc, more preferably greater than 1.48 g/cc. An anode composition refers to a dry composition wherein the active material is an anode active material as detailed above.

In another embodiment, for a cathode composition, the film has a density greater than 1.65 g/cc, advantageously greater than 1.66 g/cc, preferably greater than 1.67 g/cc, more preferably greater than 1.68 g/cc, most preferably greater than 1.69 g/cc, in particular greater than 1.70 g/cc. A cathode composition refers to a dry composition wherein the active material is a cathode active material as detailed above.

The density is measured by cutting the film into 2 cm * 2 cm square, measuring the weight by a balance and then divide it by the volume of the film. The thickness of the film can be measured according to any known methods of the art using a spectrophotometer. It has been observed that by using a film having the density mentioned above, an improved high-rate capacity can be obtained.

In a preferred embodiment, the thickness of the film ranges from 5 $\mu$m to 500 $\mu$m.

Hence, a dry-coated electrode can be made using said film. The present invention therefore provides a process to prepare a dry-coated electrode according to the present invention comprising the steps of dry mixing at least one active material, at least one binder, optionally at least one conductive agent to provide an electrode formulation ; processing said electrode formulation to form a free standing film, and laminated said free standing film on a substrate to form a laminated film coated on a substrate, preferably on a current collector. This process is particularly suitable when said at least one binder comprises a fibrillizable fluoropolymer and a polyamide thermoplastic polymer. The step of processing the electrode formulation to form a film may be carried out over a large range of temperature (15°C to 300°C). Said step of processing the electrode formulation to form a film may be carried out at low temperature of from 15°C to 50°C for ease.

The dry composition can also be used to prepare a dry-coated electrode by a solventless process. Hence, the present invention provides a dry-coated electrode comprising the dry composition of the present invention coated on a substrate by a solventless process, preferably said substrate is a current collector. A process to prepare a dry-coated electrode according to present invention comprises the steps of dry mixing at least one active material, at least one binder, optionally at least one conductive agent to provide an electrode formulation ; depositing said electrode formulation on a substrate by a solventless process to obtain a Li-ion battery electrode; consolidation of said electrode by thermo-mechanical treatment carried out at a temperature ranging from 15°C to 300°C. A thermo-mechanical treatment refers to the application of a temperature with mechanical pressure. The pressure applied during the thermo-mechanical treatment is generally lower than 1 kN/mm, preferably lower than 0.75 kN/mm, more preferably lower than 0.5 kN/mm. Such thermo-mechanical treatment can be done by for example a calendaring machine with heatable rolls or a plate-plate press which can also be heated as well. The preferred thickness of an electrode is from 0.1 $\mu$m to 1000 $\mu$m, preferably from 0.1 $\mu$m to 300 $\mu$m.

The current collector of the electrode may be also coated with a primer layer to improve the adhesion of the dry composition thereon. The primer layer may comprise a polymer selected from the group consisting of fluoropolymer and (meth)acrylic-based polymer or mixtures thereof. The primer layer may be coated on the current collector and the dry composition is subsequently coated on the primer layer. Said primer layer may also contain conductive materials selected from the group consisting of carbon blacks such as acetylene black, Ketjen black; carbon fibers such as carbon nanotube, carbon nanofiber, vapor growth carbon fiber; metal powders such as SUS powder, and aluminum powder. Preferably, the primer layer comprises between 10% to 60% of said conductive materials. Said primer layer may also contain inorganic fillers having a melting point of 200°C or more and high electric insulating property and being electrochemically stable within the application range of a lithium-ion secondary battery. The inorganic fillers are selected from the group consisting of oxide ceramics such as alumina, silica, titania, zirconia, magnesia, ceria, yttria, zinc oxide, and iron oxide; nitride ceramics such as silicon nitride, titanium nitride, and boron nitride; ceramics such as silicon carbide, calcium carbonate, magnesium sulfate, aluminum sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and silica sand; and glass fiber. Preferably, the primer layer comprises between 10% to 80 % of said conductive materials. The (meth)acrylic-based polymer may be the polymer P1 of formula (Ia) as defined in the present application. The fluoropolymer may comprise recurring units derived from a monomer selected from the group consisting of vinyl fluoride; vinylidene fluoride (VDF); trifluoroethylene (VF3); chlorotrifluoroethylene (CTFE); 1,2-difluoroethylene; tetrafluoroethylene (TFE); hexafluoropropylene (HFP); perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); monomer with the formula $CF_2=CFOCF_2CF(CF_3)OCF_2CF_2X$ where X is $SO_2F$, $CO_2H$, $CH_2OH$, $CH_2OCN$, or $CH_2OPO_3H$; monomer with formula $CF_2=CFOCF_2CF_2SO_2F$; the monomer with the formula $F(CF_2)nCH_2OCF=CF_2$ where n is 1, 2, 3, 4, or 5; the monomer with the formula $R^1CH_2OCF=CF_2$ in which $R^1$ is hydrogen or $F(CF_2)_m$ and m is 1, 2, 3 or 4; the monomer with the formula $R^2OCF=CH_2$ in which $R^2$ is $F(CF_2)_p$ and p is 1, 2, 3 or 4; trifluoropropene, tetrafluoropropene, hexafluoroisobutylene, perfluorobutylene , pentafluoropropene, bromotrifluoroethylene, chlorofluoroethylene, chlorotrifluoropropene and 2-trifluoromethyl-3,3,3-trifluoro-1-propene or a mixture thereof.

In another aspect, the present invention provides a Li-ion battery. Said Li-ion battery comprises a positive electrode, a negative electrode and a separator, wherein at least one of the electrodes is a dry-coated electrode according to the present invention. Said Li-ion battery may also comprise an electrolyte. The electrolyte may be selected from the group consisting of $LiCF_3SO_3$, $LiPF_6$, $LiClO_4$, $LiBF_4$, $LiB(C_2O_4)_2$, $LiN(SO_2F)_2$, $LiN(SO_2CF_3)_2$, $LiN(SO_2C_2F_3)_2$, $LiN(SO_2C_2F_5)_2$, $LiN(SO_2F)(SO_2CF_3)$, $LiN(SO_2F)(SO_2C_2F_5)$, $LiN(SO_2CF_3)(SO_2C_2F_5)$, $LiAsF_6$, $LiBF_2C_2O_4$, $LiNO_3$,

LiPF3(CF$_2$CF$_3$)$_3$, LiBETI, LiTDI and mixtures thereof.

**Examples**

Preparation of coated Cu foil:

1.6 g of Kynar HSV1810 (PVDF, Arkema) was dissolved in 18.4 g of N-methyl pyrrolidone to obtain an 8 wt% solution. 10 g of the solution was transferred into a 125 ml plastic container with lid. 0.8 g of Super P-Li(Carbon black powder, Imerys) was added into the solution. 5 pieces of $\phi$=5 mm zirconia beads were further added then mixed in ARE-310(Thinky) at 2000 rpm for 30 sec. 3 g of N-methyl pyrrolidone was added then mixed in ARE-310 again at 2000 rpm for 30 sec. This step was repeated until total of 12 g of N-methyl pyrrolidone was added and mixed. The obtained Super P-Li slurry was cast on Cu foil at 4 mil wet thickness then dried at 120°C for 10 min to achieve a coated Cu foil.

Example 1

158-C (graphite, BTR, Dv50 = 16 $\mu$m), polytetrafluoroethylene (Dv50 = 470$\mu$m), and copolyamide 6/12 powder (melting temperature 142°C and Dv50 = 10$\mu$m) were mixed in a mortar at 95/2.5/2.5 weight ratio. The mixed powder was pressed in a roll press at 160°C, 0 kN pressure to obtain a film. The film was laminated on the coated Cu foil by passing through the roll press at 160°, 2 kN pressure. The density of the laminated film was 1.52 g/cc. The prepared anode structure was used to prepare a battery with PE separator and Li metal as cathode. PE separator was sandwiched between the anode structure and Li metal in a glove box to obtain a cell structure. The cell structure was put into a container, electrolyte was injected and sealed to obtain a coin cell. The prepared coin cell was discharged at C/10 to 0.05 V then charged at C/10 to 2V. Coulombic efficiency was obtained by dividing the charge capacity by discharge capacity.

Example 2

Same process as in Example 1 was taken except Polyamide 12 powder (melting temperature of 177°C, and Dv50 = 10 $\mu$m,) was used in place of the copolyamide. The density of the laminated film was 1.54 g/cc.

Comparative example

Same process as in Example 1 was taken except poly vinylidene fluoride was used in place of the copolyamide. The density of the laminated film was 1.70 g/cc.
The initial coulombic efficiency of each example is listed in table 1.

Table 1

|  | First Coulombic efficiency (%) |
| --- | --- |
| Example 1 | 88.1 |
| Example 2 | 89.2 |
| Comparative example | 71.7 |

It can be observed that the first coulombic efficiency increases when the binder used in the electrode comprises a fluoropolymer and a polyamide thermoplastic polymer instead of fluoropolymer only. When the first coulombic efficiency of the electrode increases, the electricity loss in the charge/discharge cycle in lithium-ion batteries is reduced. The same effect has been observed when a non-fibrillizable fluoropolymer is used instead of a fibrillizable fluoropolymer.

**Claims**

1. Dry composition comprising at least one active material, at least one binder, optionally at least one conductive agent, **characterized in that** said at least one binder comprises a fluoropolymer and a polyamide thermoplastic polymer.

2. Dry composition according to any one of the previous claims wherein said polyamide thermoplastic polymer has a particle size distribution Dv50 lower than 30$\mu$m.

3. Dry composition according to any one of the previous claims wherein said fluoropolymer is a fibrillizable fluoropolymer, preferably comprises recurring units derived from a monomer **M1a** being tetrafluoroethylene.

4. Dry composition according to the previous claim wherein said fibrillizable fluoropolymer has a particle size distribution Dv50 lower than 1000 $\mu$m.

5. Dry composition according to claims 1 or 2 wherein said fluoropolymer is a non-fibrillizable polymer, preferably comprises recurring units derived from a monomer **M1a** selected from the group consisting of vinylidene fluoride, trifluoroethylene, 1,2-difluoroethylene, perfluoro(alkyl vinyl) ethers, perfluoro(1,3-dioxole), perfluoro(2,2-dimethyl-1,3-dioxole), monomers of formula $CF_2=CFOCF_2CF(CF_3)OCF_2CF_2X$ wherein X is $SO_2F$, $CO_2H$, $CH_2OH$, $CH_2OCN$ or $CH_2OPO_3H$, monomers of formula $CF_2=CFOCF_2CF_2SO_2F$, monomers of formula $F(CF_2)$ $nCH_2OCF=CF_2$ wherein n is 1, 2, 3, 4 or 5, monomers of formula $R^1CH_2OCF=CF_2$ wherein $R^1$ is hydrogen or $F(CF_2)_m$ and m is 1, 2, 3 or 4; monomers of formula $R^2OCF=CH_2$ wherein $R^2$ is $F(CF_2)_p$ and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoropropene, ethylene and 2-trifluoromethyl-3,3,3-trifluoro-1-propène or mixtures thereof.

6. Dry composition according to the previous claim wherein said non-fibrillizable fluoropolymer has a particle size distribution Dv50 lower than 100 $\mu$m.

7. Dry composition according to any of the previous claims wherein said polyamide thermoplastic polymer is selected from the group consisting of PA 6, PA 11, PA 12, PA 6.10, PA 6.12, PA 6.14, PA 6.18, PA 10.10, PA 10.12, copolyamides, and mixtures thereof.

8. Dry composition according to any one of the previous claims wherein said at least one active material is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

9. Dry composition according to any one of the previous claims wherein said at least one active material is selected from the group consisting of lithium metal, lithium alloy, a metal oxide, a carbon material such as graphite or hard carbon, silicon, a silicon alloy, and $Li_4TiO_{12}$.

10. Dry composition according to any one of the previous claims having the following mass composition:

    a. 50% to 99,9% of said at least one active material, preferably 50% to 99%,
    b. 0% to 25% of said at least one conductive agent, preferably 0.5% to 25%,
    c. 0.1% to 25% of said at least one binder, preferably 0.5% to 25%,
    d. 0% to 5% of at least an additive selected from the group consisting of plasticizer, ionic liquid, dispersing agent for conductive additive, and flowing aid agent;

    the sum of all these percentages being 100%.

11. Film comprising, preferably consisting of, the dry composition of any one of the previous claims.

12. Film according to the previous claim having a density lower than 1.65 g/cc when the active material, comprised in the dry composition, is selected from the group consisting of lithium metal, lithium alloy, a metal oxide, a carbon material such as graphite or hard carbon, silicon, a silicon alloy, and $Li_4TiO_{12}$.

13. Film according to the claim 11 having a density greater than 1.65 g/cc when the active material, comprised in the dry composition, is selected from the group consisting of $LiCoO_2$, $Li(Ni,Co,Al)O_2$, $Li_{(1+x)}Ni_aMn_bCo_c$ (x represents a real number of 0 or more, a=0.9, 0.8, 0.6, 0.5, or 1/3, b=0.05, 0.1, 0.2, 0.3, or 1/3, c=0.05, 0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{(1+x)}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ wherein x and y independently representing a real number between 0 to 2, and a lithium metal phosphate having a composition represented by $LiMPO_4$, M representing Fe, Mn, Co or Ni.

14. Dry-coated electrode comprising the dry composition according to any one of the previous claims 1 to 10 coated on a substrate by a solventless process.

15. Li-ion battery comprising a positive electrode, a negative electrode and a separator, wherein at least one of the electrodes is a dry-coated electrode according to the previous claim.

16. A process to prepare a dry-coated electrode according to claim 13 comprising the steps of dry mixing at least one active material, at least one binder, optionally at least one conductive agent to provide an electrode formulation; processing said electrode formulation to form a free-standing film and laminated said free standing film on a substrate to form a laminated film coated on a substrate.

17. A process to prepare a dry-coated electrode according to claim 13 comprising the steps of dry mixing at least one active material, at least one binder, optionally at least one conductive agent to provide an electrode formulation; depositing sad electrode formulation on a substrate by a solvent less process to obtain a Li-ion battery electrode; consolidation of said electrode by thermo-mechanical treatment carried out at a temperature ranging from 15°C to 300°C.

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 033438 A (HITACHI VEHICLE ENERGY LTD) 16 February 2012 (2012-02-16) | 1-6,8, 10,11, 13-15 | INV. H01M4/62 H01M4/04 |
| A | * paragraphs [0025], [0026], [0032] – [0036]; claim all * | 7,9,12, 16,17 | H01M4/131 H01M4/136 H01M4/1391 |
| X | JP 2004 335188 A (HITACHI MAXELL) 25 November 2004 (2004-11-25) | 1-8,10, 11,13-15 | H01M4/1397 H01M4/485 |
| A | * claim all; example all * | 9,12,16, 17 | H01M4/505 H01M4/525 |
| X | US 2015/280278 A1 (ORIANI STEVEN R [US]) 1 October 2015 (2015-10-01) | 1-15 | |
| A | * paragraphs [0067], [0070], [0071], [0074] * | 16,17 | |
| X | KR 2019 0089385 A (SAMSUNG SDI CO LTD [KR]) 31 July 2019 (2019-07-31) | 1-8,10, 11,13-15 | |
| A | * paragraph [0076]; claim all; examples 1-3 * | 9,12,16, 17 | TECHNICAL FIELDS SEARCHED (IPC) |
| A | US 2023/027323 A1 (XU SHAOMAO [US] ET AL) 26 January 2023 (2023-01-26) * the whole document * | 1-17 | H01M |

The present search report has been drawn up for all claims

| Place of search | Date of completion of the search | Examiner |
|---|---|---|
| Munich | 8 May 2024 | Götz, Heide |

EPO FORM 1503 03.82 (P04C01)

## ANNEX TO THE EUROPEAN SEARCH REPORT
## ON EUROPEAN PATENT APPLICATION NO.

EP 23 30 7355

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | | Publication date | Patent family member(s) | | Publication date |
|---|---|---|---|---|---|
| JP 2012033438 | A | 16-02-2012 | NONE | | |
| JP 2004335188 | A | 25-11-2004 | JP | 4124694 B2 | 23-07-2008 |
| | | | JP | 2004335188 A | 25-11-2004 |
| US 2015280278 | A1 | 01-10-2015 | NONE | | |
| KR 20190089385 | A | 31-07-2019 | NONE | | |
| US 2023027323 | A1 | 26-01-2023 | CN | 115642259 A | 24-01-2023 |
| | | | DE | 102022109368 A1 | 26-01-2023 |
| | | | US | 2023027323 A1 | 26-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190305316 A
- US 20200313193 A